# EUROPÄISCHE PATENTSCHRIFT

(11) **EP 3 755 911 B1**
(45) Veröffentlichungstag und Bekanntmachung des Hinweises auf die Patenterteilung: **04.05.2022**
(21) Anmeldenummer: 19706531.1
(22) Anmeldetag: 18.02.2019
(51) Int. Cl.: F16C 17/03, F16C 25/04

(54) **KIPPSEGMENTLAGER MIT VORSPANNEINRICHTUNG**
TILTING PAD BEARING WITH PRELOADING DEVICE
PALIER À SEGMENTS BASCULANTS AVEC DISPOSITIF DE PRÉCONTRAINTE

(30) Priorität: 23.02.2018 DE 102018202781
(43) Veröffentlichungstag der Anmeldung: 30.12.2020
(73) Patentinhaber: Robert Bosch GmbH, 70442 Stuttgart (DE)
(72) Erfinder: FOERSTER, Felix, 75433 Maulbronn (DE)
(86) Internationale Anmeldenummer: PCT/EP2019/053944
(87) Internationale Veröffentlichungsnummer: WO 2019/162223

(56) Entgegenhaltungen:
- EP-A2- 3 315 803
- WO-A1-2009/137316
- DE-A1-102016 211 236
- JP-U- S5 770 519
- JP-U- S57 181 919
- US-A- 5 098 203
- US-A1- 2015 229 182

## Beschreibung

Die Erfindung betrifft ein Kippsegmentlager mit Kippsegmenten, die relativ zu einem Gehäusekörper kippbar sind, um zwischen den Kippsegmenten und einem Rotorkörper konvergente Lagerspalte zu erzeugen, und die durch eine Vorspanneinrichtung vorgespannt sind.

### Stand der Technik

Durch die JP S57 181919 U und JP S57 70519 U sind Kippsegmentlager gemäß dem Oberbegriff des Anspruchs 1 bekannt, die Kippsegmente aufweisen, die relativ zu einem Gehäusekörper kippbar sind, um zwischen den Kippsegmenten und einem Rotorkörper konvergente Lagerspalte zu erzeugen. Die Kippsegmente sind durch eine Vorspanneinrichtung vorgespannt, die eine Magneteinrichtung umfasst. Die Magneteinrichtung umfasst einen Permanentmagneten in dem Gehäusekörper, der mit einem Permanentmagneten in einem der Kippsegmente zusammenwirkt.

Durch die US 2015/229182 A1 ist ein hydrodynamisches Lager bekannt, wobei zwischen dem Lager und einem Rotorkörper konvergente Lagerspalte erzeugt sind. Das Lager ist durch eine Vorspanneinrichtung vorgespannt, die eine Magneteinrichtung umfasst. Dabei ist zusätzlich zu dem hydrodynamischen Lager ein permanentmagnetisches Lager vorgesehen, das die Vorspanneinrichtung bildet. Über die konkrete Ausbildung des hydrodynamischen Lagers sind hierbei keine Angaben gemacht.

Durch die WO 2009/137316 A1 sind hydrodynamische Lager in Form von Kippsegmentlagern bekannt. Eine magnetische Vorspanneinrichtung ist dabei nicht vorhanden.

Durch die US 5 098 203 A ist ein magnetisches Lager bekannt, bei dem Elektromagnete oder Permanentmagnete vorgesehen sein können.

### Offenbarung der Erfindung

Aufgabe der Erfindung ist es, ein Kippsegmentlager mit Kippsegmenten, die relativ zu einem Gehäusekörper kippbar sind, um zwischen den Kippsegmenten und einem Rotorkörper konvergente Lagerspalte zu erzeugen, und die durch eine Vorspanneinrichtung vorgespannt sind, im Hinblick auf die Funktion und/oder die Lebensdauer des Kippsegmentlagers zu verbessern.

Die Aufgabe ist bei einem Kippsegmentlager nach Anspruch 1 mit Kippsegmenten, die relativ zu einem Gehäusekörper kippbar sind, um zwischen den Kippsegmenten und einem Rotorkörper konvergente Lagerspalte zu erzeugen, und die durch eine Vorspanneinrichtung vorgespannt sind, dadurch gelöst, dass die Magneteinrichtung mit einer Federeinrichtung kombiniert ist. Durch diese Kombination ergibt sich eine Vielzahl von zusätzlichen Möglichkeiten, wie die Vorspannung für die Kippsegmente besonders effektiv variiert werden kann.

Ein weiteres bevorzugtes Ausführungsbeispiel des Kippsegmentlagers ist dadurch gekennzeichnet, dass die durch die Magneteinrichtung erzeugte Vorspannung verstellbar ist. Das Verstellen der Vorspannung kann durch die vorab beanspruchte Kombination der Magneteinrichtung mit der Federeinrichtung realisiert werden.

Ein weiteres bevorzugtes Ausführungsbeispiel des Kippsegmentlagers ist dadurch gekennzeichnet, dass die Magneteinrichtung in einer Umfangsrichtung von einer Kippstelle eines zugehörigen Kippsegments beabstandet ist. Die Kippstelle ist zum Beispiel in Umfangsrichtung in der Mitte des Kippsegments angeordnet. Dann ist die Magneteinrichtung vorteilhaft an einem Ende des Kippsegments angeordnet. Durch die Hebelwirkung kann mit einer relativ schwachen Magneteinrichtung eine ausreichende Vorspannung auf das Kippsegment erzeugt werden. Selbstverständlich können einem Kippsegment auch mehrere Magneteinrichtungen zugeordnet sein.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

Es zeigen:
Figur 1 eine schematische Darstellung eines Kippsegmentlagers mit einem Rotorkörper, einem Kippsegment und einem Gehäusekörper im Querschnitt, gemäß einer ersten nicht erfindungsgemäßen Ausführungsform mit einer Magneteinrichtung, die einen Permanentmagneten umfasst, der in dem Gehäusekörper angeordnet ist;
Figur 2 ein ähnliches Kippsegmentlager wie in Figur 1 mit einer Magneteinrichtung, die einen Permanentmagneten umfasst, der in dem Kippsegment angeordnet ist;
Figur 3 ein nicht erfindungsgemäßes Kippsegmentlager mit zwei Permanentmagneten, von denen ein erster in dem Gehäusekörper und ein zweiter in dem Kippsegment angeordnet ist; und
Figur 4 ein erfindungsgemäßes Kippsegmentlager mit einer Magneteinrichtung, die mit einer Federeinrichtung kombiniert ist.

### Beschreibung der Ausführungsbeispiele

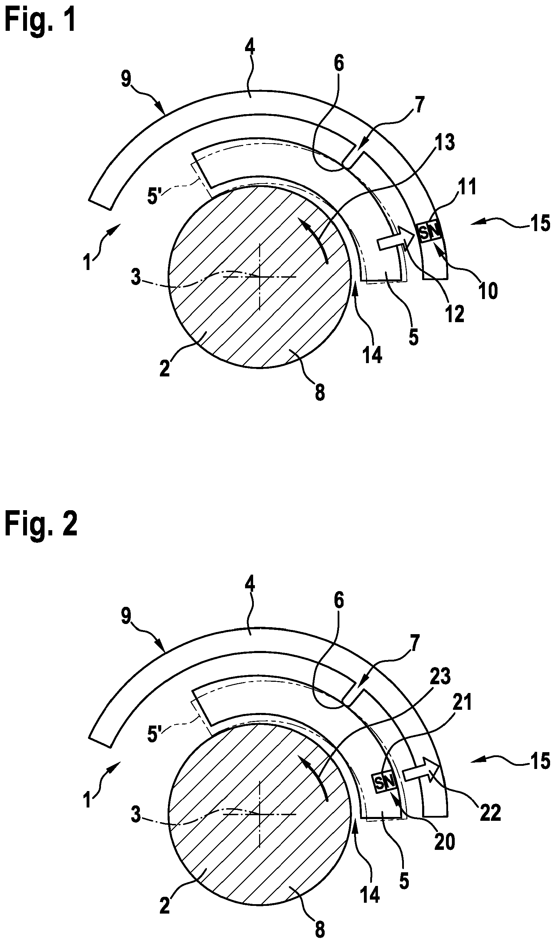

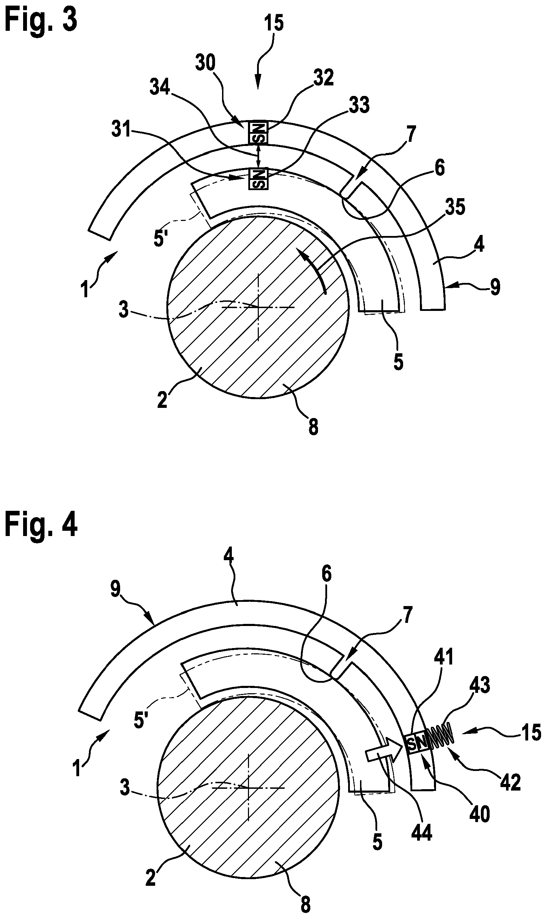

In den Figuren 1 bis 4 ist ein Kippsegmentlager 1 mit einem Rotorkörper 2 gemäß vier verschiedenen Ausführungsformen im Querschnitt dargestellt, wobei nur die Figur 3 ein erfindungsgemäßes Ausführungsbeispiel zeigt. Der Rotorkörper 2 ist in einem Gehäusekörper 4 um eine Drehachse 3 drehbar. Der Gehäusekörper 4 ist, anders als dargestellt, zum Beispiel als geschlossener Ringkörper ausgeführt und stellt ein radial nach außen geschlossenes Gehäuse 9 des Kippsegmentlagers 1 dar.

Der Rotorkörper 2 ist Teil eines Rotors 8. Bei dem Rotor 8 handelt es sich zum Beispiel um eine Welle, die um die Drehachse 3 drehbar ist. Dann handelt es sich bei dem Rotorkörper 2 zum Beispiel um einen Wellenabschnitt der Welle.

Das Kippsegmentlager 1 umfasst mehrere Kippsegmente, von denen in den Figuren1 bis 4 nur ein Kippsegment 5 beziehungsweise 5' dargestellt ist. Mit 5 ist das Kippsegment in seiner nicht vorgespannten Lage bezeichnet. Mit 5' ist das Kippsegment in seiner vorgespannten Lage bezeichnet. In seiner vorgespannten Lage ergibt sich zwischen dem Rotorkörper 2 und dem Kippsegment 5' ein konvergenter Lagerspalt 14.

Das Kippsegment 5, 5' ist an einer Kippstelle 6 kippbar oder schwenkbar an dem Gehäusekörper 4 angeordnet beziehungsweise gelagert. Zur Darstellung der Kippstelle 6 weist der Gehäusekörper 4 einen radial nach innen vorspringenden Steg 7 auf. Die Kippstelle 6 ist, bezogen auf das Kippsegment 5, 5', etwa mittig angeordnet. Das dem Kippsegment 5, 5' zugewandte freie Ende des Stegs 7 ist vorteilhaft mit einer Rundung versehen.

Die Vorspannung zum Kippen des Kippsegments 5, 5' wird mit Hilfe einer Vorspanneinrichtung 15 erzeugt. Mit Hilfe der Vorspanneinrichtung 15 wird das Kippsegment 5 aus seiner nicht vorgespannten Lage 5 in seine vorgespannte Lage 5' gekippt, um den konvergenten Lagerspalt 14 zu erzeugen.

Bei der in Figur 1 dargestellten nicht erfindungsgemäßen Ausführungsform des Kippsegmentlagers 1 umfasst die Vorspanneinrichtung 15 eine Magneteinrichtung 10 mit einem Permanentmagneten 11. Der Permanentmagnet 11 ist zum Beispiel als Rundmagnet ausgeführt und in einer entsprechenden Ausnehmung des Gehäusekörpers 4 aufgenommen. Der Permanentmagnet 11 ist zum Beispiel in die Ausnehmung des Gehäusekörpers 4 eingepresst.

Der Permanentmagnet 11 kann auch als Stabmagnet ausgeführt sein. Durch Großbuchstaben S und N ist ein Südpol und ein Nordpol des Permanentmagneten 11 angedeutet. Durch einen Pfeil 12 ist in Figur 1 eine Vorspannkraft angedeutet, mit welcher das Kippsegment 5 in seine vorgespannte Lage 5' vorgespannt wird.

Das Kippsegment 5, 5' ist aus einem magnetisierbaren Material gebildet und wird, wie in Figur 1 durch den Pfeil 12 angedeutet ist, von dem Permanentmagneten 11 in dem Gehäusekörper 4 angezogen. Daraus ergibt sich dann der gewünschte konvergente Lagerspalt 14, in welchem sich im Betrieb des Kippsegmentlagers 1 ein Schmierfilm aufbaut, wenn sich der Rotorkörper 2 um seine Drehachse 3 relativ zu dem Gehäusekörper 4 und dem Kippsegment 5, 5' dreht, wie in Figur 1 durch einen Pfeil 13 angedeutet ist.

Zur Erzeugung der Vorspannung kann alternativ oder zusätzlich auch ein Elektromagnet verwendet werden. Der (nicht dargestellte) Elektromagnet kann zum Beispiel in den Gehäusekörper 4 und/oder in das Kippsegment 5, 5' eingebracht werden. Dann kann mit dem Elektromagneten das Kippsegment 5, 5' an einer bestimmten Stelle mit einer definierten Kraft angezogen oder abgestoßen werden.

Der Elektromagnet kann auch mit einem Permanentmagneten kombiniert werden. So kann zum Beispiel der Elektromagnet in dem Gehäusekörper 4 und ein Permanentmagnet in dem Kippsegment 5, 5' angeordnet werden.

Bei der in Figur 2 dargestellten nicht erfindungsgemäßen Ausführungsform umfasst die Vorspanneinrichtung 15 eine Magneteinrichtung 20 mit einem Permanentmagneten 21. Der Permanentmagnet 21 ist im Unterschied zu Figur 1 nicht in dem Kippsegment 5, 5', sondern in dem Gehäusekörper 4 angeordnet. Ein Südpol S des Permanentmagneten 21 ist radial nach innen zum Rotorkörper 2 gerichtet. Ein Nordpol N des Permanentmagneten 21 ist dem Kippsegment 5, 5' zugewandt.

Je nach Ausrichtung des Permanentmagneten 21 in dem Rotorkörper 2 kann eine abstoßende oder eine anziehende Kraft auf das Kippsegment 5, 5' erzeugt werden, wie in Figur 2 durch einen Pfeil 22 angedeutet ist. Durch einen Pfeil 23 ist die Drehrichtung des Rotorkörpers 2 angedeutet.

Bei der in Figur 3 dargestellten nicht erfindungsgemäßen Ausführungsform umfasst die Vorspanneinrichtung 15 eine Magneteinrichtung 30 und eine zusätzliche Magneteinrichtung 31. Die Magneteinrichtung 30 umfasst einen Permanentmagneten 32, der in dem Gehäusekörper 4 angeordnet ist. Die zusätzliche Magneteinrichtung 31 umfasst einen Permanentmagneten 33, der in dem Kippsegment 5, 5' angeordnet ist.

Die beiden Nordpole N der Permanentmagneten 32 und 33 sind einander zugewandt, so dass eine abstoßende Kraft zwischen dem Kippsegment 5, 5' und dem Rotorkörper 2 erzeugt wird, wie in Figur 3 durch einen Doppelpfeil 34 angedeutet ist.

Durch einen Pfeil 35 ist in Figur 3 die Drehrichtung des Rotorkörpers 2 im Betrieb des Kippsegmentlagers 1 angedeutet. Durch die abstoßende Wirkung 34 wird das Kippsegment aus seiner nicht vorgespannten Lage 5 in Figur 3 in seine vorgespannte Lager 5' vorgespannt.

Bei dem in Figur 4 dargestellten erfindungsgemäßen Ausführungsbeispiel des Kippsegmentlagers 1 umfasst die Vorspanneinrichtung 15 eine Magneteinrichtung 40, die mit einer Federeinrichtung 42 kombiniert ist. Die Magneteinrichtung 40 umfasst einen Permanentmagneten 41, der, wie bei dem in Figur 1 dargestellten Ausführungsbeispiel in dem Gehäusekörper 4 angeordnet ist.

Durch den Permanentmagneten 41 wird, wie in Figur 4 durch einen Pfeil 44 angedeutet ist, eine anziehende Kraft auf das Kippsegment 5, 5' ausgeübt. Die Federeinrichtung 42 umfasst eine Feder 43, die zum Beispiel als Schraubendruckfeder oder Schraubenzugfeder ausgeführt ist, wenn der Permanentmagnet 41 als Rundmagnet ausgeführt ist.

Mit der Feder 43 kann alternativ oder zusätzlich zu der Wirkung des Permanentmagneten 41 eine drückende oder ziehende Kraft auf das Kippsegment 5, 5' ausgeübt werden. Die Feder 43 kann auch unabhängig von dem Permanentmagneten 41 an einer anderen Stelle angeordnet sein.

Gehäusekörpers 4 aufgenommen. Der Permanentmagnet 11 ist zum Beispiel in die Ausnehmung des Gehäusekörpers 4 eingepresst.

Der Permanentmagnet 11 kann auch als Stabmagnet ausgeführt sein. Durch Großbuchstaben S und N ist ein Südpol und ein Nordpol des Permanentmagneten 11 angedeutet. Durch einen Pfeil 12 ist in Figur 1 eine Vorspannkraft angedeutet, mit welcher das Kippsegment 5 in seine vorgespannte Lage 5' vorgespannt wird.

Das Kippsegment 5, 5' ist aus einem magnetisierbaren Material gebildet und wird, wie in Figur 1 durch den Pfeil 12 angedeutet ist, von dem Permanentmagneten 11 in dem Gehäusekörper 4 angezogen. Daraus ergibt sich dann der gewünschte konvergente Lagerspalt 14, in welchem sich im Betrieb des Kippsegmentlagers 1 ein Schmierfilm aufbaut, wenn sich der Rotorkörper 2 um seine Drehachse 3 relativ zu dem Gehäusekörper 4 und dem Kippsegment 5, 5' dreht, wie in Figur 1 durch einen Pfeil 13 angedeutet ist.

Zur Erzeugung der Vorspannung kann alternativ oder zusätzlich auch ein Elektromagnet verwendet werden. Der (nicht dargestellte) Elektromagnet kann zum Beispiel in den Gehäusekörper 4 und/oder in das Kippsegment 5, 5' eingebracht werden. Dann kann mit dem Elektromagneten das Kippsegment 5, 5' an einer bestimmten Stelle mit einer definierten Kraft angezogen oder abgestoßen werden.

Der Elektromagnet kann auch mit einem Permanentmagneten kombiniert werden. So kann zum Beispiel der Elektromagnet in dem Gehäusekörper 4 und ein Permanentmagnet in dem Kippsegment 5, 5' angeordnet werden.

Bei dem in Figur 2 dargestellten Ausführungsbeispiel umfasst die Vorspanneinrichtung 15 eine Magneteinrichtung 20 mit einem Permanentmagneten 21. Der Permanentmagnet 21 ist im Unterschied zu Figur 1 nicht in dem Kippsegment 5, 5', sondern in dem Gehäusekörper 4 angeordnet. Ein Südpol S des Permanentmagneten 21 ist radial nach innen zum Rotorkörper 2 gerichtet. Ein Nordpol N des Permanentmagneten 21 ist dem Kippsegment 5, 5' zugewandt.

Je nach Ausrichtung des Permanentmagneten 21 in dem Rotorkörper 2 kann eine abstoßende oder eine anziehende Kraft auf das Kippsegment 5, 5' erzeugt werden, wie in Figur 2 durch einen Pfeil 22 angedeutet ist. Durch einen Pfeil 23 ist die Drehrichtung des Rotorkörpers 2 angedeutet.

Bei dem in Figur 3 dargestellten Ausführungsbeispiel umfasst die Vorspanneinrichtung 15 eine Magneteinrichtung 30 und eine zusätzliche Magneteinrichtung 31. Die Magneteinrichtung 30 umfasst einen Permanentmagneten 32, der in dem Gehäusekörper 4 angeordnet ist. Die zusätzliche Magneteinrichtung 31 umfasst einen Permanentmagneten 33, der in dem Kippsegment 5, 5' angeordnet ist.

Die beiden Nordpole N der Permanentmagneten 32 und 33 sind einander zugewandt, so dass eine abstoßende Kraft zwischen dem Kippsegment 5, 5' und dem Rotorkörper 2 erzeugt wird, wie in Figur 3 durch einen Doppelpfeil 34 angedeutet ist.

Durch einen Pfeil 35 ist in Figur 3 die Drehrichtung des Rotorkörpers 2 im Betrieb des Kippsegmentlagers 1 angedeutet. Durch die abstoßende Wirkung 34 wird das Kippsegment aus seiner nicht vorgespannten Lage 5 in Figur 3 in seine vorgespannte Lager 5' vorgespannt.

Bei dem in Figur 4 dargestellten Ausführungsbeispiel des Kippsegmentlagers 1 umfasst die Vorspanneinrichtung 15 eine Magneteinrichtung 40, die mit einer Federeinrichtung 42 kombiniert ist. Die Magneteinrichtung 40 umfasst einen Permanentmagneten 41, der, wie bei dem in Figur 1 dargestellten Ausführungsbeispiel in dem Gehäusekörper 4 angeordnet ist.

Durch den Permanentmagneten 41 wird, wie in Figur 4 durch einen Pfeil 44 angedeutet ist, eine anziehende Kraft auf das Kippsegment 5, 5' ausgeübt. Die Federeinrichtung 42 umfasst eine Feder 43, die zum Beispiel als Schraubendruckfeder oder Schraubenzugfeder ausgeführt ist, wenn der Permanentmagnet 41 als Rundmagnet ausgeführt ist.

Mit der Feder 43 kann alternativ oder zusätzlich zu der Wirkung des Permanentmagneten 41 eine drückende oder ziehende Kraft auf das Kippsegment 5, 5' ausgeübt werden. Die Feder 43 kann auch unabhängig von dem Permanentmagneten 41 an einer anderen Stelle angeordnet sein.

## Patentansprüche

1. Kippsegmentlager (1) mit Kippsegmenten (5,5'), die relativ zu einem Gehäusekörper (4) kippbar sind, um zwischen den Kippsegmenten (5,5') und einem Rotorkörper (2) konvergente Lagerspalte (14) zu erzeugen, und die durch eine Vorspanneinrichtung (15) vorgespannt sind, wobei die Vorspanneinrichtung (15) eine Magneteinrichtung (30) umfasst, wobei die Magneteinrichtung (30) einen Permanentmagneten (32) in dem Gehäusekörper (4) umfasst, der mit einem Permanentmagneten (33) in einem der Kippsegmente (5,5') zusammenwirkt, **dadurch gekennzeichnet, dass** die Magneteinrichtung (40) mit einer Federeinrichtung (42) kombiniert ist.

2. Kippsegmentlager nach Anspruch 1, **dadurch gekennzeichnet, dass** die durch die Magneteinrichtung (30) erzeugte Vorspannung verstellbar ist.

3. Kippsegmentlager nach Anspruch 1 oder 2, **dadurch gekennzeichnet, dass** die Magneteinrichtung (30) in einer Umfangsrichtung von einer Kippstelle (6) eines zugehörigen Kippsegments (5,5') beabstandet ist.

## Claims

1. Tilting pad bearing (1) having tilting pads (5, 5') which are able to tilt relative to a housing body (4) so as to generate converging bearing gaps (14) between the tilting pads (5, 5') and a rotor body (2), and which are preloaded by a preloading installation (15), wherein the preloading installation (15) comprises a magnet installation (30), wherein the magnet installation (30) in the housing body (4) comprises a permanent magnet (32) that interacts with a permanent magnet (33) in one of the tilting pads (5, 5'), **characterized in that** the magnet installation (40) is combined with a spring installation (42).

2. Tilting pad bearing according to Claim 1, **characterized in that** the preload generated by the magnet installation (30) is adjustable.

3. Tilting pad bearing according to Claim 1 or 2, **characterized in that** the magnet installation (30) in a circumferential direction is spaced apart from a tilting location (6) of an associated tilting pad (5, 5').

## Revendications

1. Palier à segments basculants (1) comprenant des segments basculants (5, 5') qui peuvent basculer par rapport à un corps de boîtier (4) afin de générer des jeux de palier convergents (14) entre les segments basculants (5, 5') et un corps de rotor (2) et qui sont précontraints par un dispositif de précontrainte (15), le dispositif de précontrainte (15) comprenant un dispositif magnétique (30), le dispositif magnétique (30) comprenant un aimant permanent (32) situé dans le corps de boîtier (4) et relié à un aimant permanent (33) situé dans l'un des segments basculants (5, 5'), **caractérisé en ce que** le dispositif magnétique (40) est combiné à un dispositif à ressort (42).

2. Palier à segments basculants selon la revendication 1, **caractérisé en ce que** la précontrainte générée par le dispositif magnétique (30) est réglable.

3. Palier à segments basculants selon la revendication 1 ou 2, **caractérisé en ce que** le dispositif magnétique (30) est distant d'un point de basculement (6) d'un segment basculant associé (5, 5') dans une direction circonférentielle.
